# FASCICULE DE BREVET EUROPEEN

(11) **EP 1 500 854 B1**
(45) Date de publication et mention de la délivrance du brevet: **26.04.2006**
(21) Numéro de dépôt: 03077331.1
(22) Date de dépôt: 24.07.2003
(51) Int. Cl.: F16K 1/30, F17C 13/04

(54) **Robinet pour bouteille de gaz avec système anti-compression adiabatique**
Ventil für einen Gaszylinder mit einer Einrichtung gegen die adiabatische Kompression
Valve for gas cylinder with an anti-adiabatic compression system

(43) Date de publication de la demande: 26.01.2005
(73) Titulaire: LUXEMBOURG PATENT COMPANY S.A., 7440 Lintgen (LU)
(72) Inventeur: Kremer, Paul, 7263 Walferdange (LU); Risse, Claude, 57310 Bertrange (FR)
(74) Mandataire: Weydert, Robert

(56) Documents cités:
- EP-A- 1 126 202
- FR-A- 1 120 877
- US-A- 4 611 628
- US-A1- 2003 131 851

## Description

La présente invention se rapporte à un robinet pour bouteille de gaz comportant un corps de robinet ayant un passage de gaz formé dans le corps du robinet, une vanne ouverte/fermée et un détendeur attachés au corps de robinet, la vanne pouvant être ouverte pour permettre au gaz de s'écouler en mode de soutirage par ledit passage vers le détendeur, un moyen anti-compression adiabatique comportant un clapet mobile disposé dans ledit passage de gaz, ce clapet à l'ouverture de la vanne, étant forcé d'une première position à surface de passage normale, vers une deuxième position, non-étanche, à surface de passage limitée, ledit clapet étant sollicité par un ressort vers sa première position, et étant pourvu d'un orifice limité qui le traverse et place l'amont et l'aval du clapet en communication permanente, cet orifice formant la surface de passage limitée, l'amont et l'aval du clapet étant aussi en communication dans la première position à surface de passage normale du clapet par un passage contournant ledit orifice et s'étendant autour du clapet, ce passage contournant l'orifice étant fermé dans la seconde position du clapet.

Les vitesses mises en jeu dans un robinet pour une bouteille de gaz à haute pression (supérieur à 200 bar) sont très élevées. Pour des gaz comme l'hélium les vitesses peuvent être largement supérieures à la vitesse du son. Avec des telles vitesses certains sièges ou pastilles en matière plastique du détendeur ne résistent pas au choc adiabatique et peuvent brûler en présence d'un gaz oxydant. Il faut donc limiter la pression et ralentir la vitesse du gaz pour absorber l'onde de choc, lors de l'ouverture de la vanne principale du robinet en vue du soutirage du gaz. Dans la technique antérieure des filtres étaient prévus entre la vanne principale et le détendeur mais ces filtres ont le désavantage de gêner le débit de gaz lorsque la bouteille est presque vide. De plus, les filtres peuvent se colmater. De ce fait, ils subissent des chocs à chaque ouverture et peuvent générer des particules. En haute pression, qui peut être de l'ordre de 300 bar, c'est-à-dire si la bouteille de gaz est remplie les filtres connus ne posent pas de problèmes et ne gênent pas le débit. Par contre, les filtres causent une perte de charge constante, et à faible pression inférieure à 50 bar des perturbations commencent et deviennent pires à 10 bar. Ces filtres connus causant une perte de charge constante gênent donc la courbe de détente du gaz à faible pression.

La demande de brevet US 2003/0131851 A1 publiée le 17 juillet 2003, sur laquelle la forme en deux parties des revendications indépendantes 1 et 4 est basée, décrit un robinet avec un clapet en amont de la vanne principale, qui à l'ouverture de la vanne est forcé d'une position à surface de passage normale vers une position à surface de passage limitée pour limiter à l'ouverture de la vanne le courant et la production de chaleur due à la compression adiabatique, et qui reprend sa position à surface de passage normale sous l'effet d'un ressort lorsque le courant du gaz s'est stabilisé.

L'invention à pour objet de fournir un robinet pour bouteille de gaz avec un moyen pour éviter l'onde de choc se produisant à l'ouverture du robinet en aval de la vanne principale du robinet en vue de protéger le détendeur, sans gêner la courbe de détente.

Selon la solution de cet objet de l'invention le robinet pour bouteille de gaz du type cité ci-avant est caractérisé en ce que, pour limiter l'onde de choc se produisant en cas d'ouverture de la vanne en aval de celle-ci, le moyen anti-compression adiabatique est disposé entre la vanne et le détendeur et comporte le clapet mobile et un siège de détendeur fixe pourvu d'un orifice faisant face à un élément de réglage du détendeur, en ce que le ressort est disposé entre le clapet et le siège du détendeur et le clapet, situé à l'extrémité amont du siège du détendeur, est pourvu d'une partie de guidage annulaire qui est reçue de façon coulissante à l'intérieur du siège du détendeur, cette partie de guidage annulaire ou le siège du détendeur étant pourvu d'une ou plusieurs découpures qui sont ouvertes dans la première position du clapet et placent ledit passage contournant l'orifice en communication avec l'aval de cet orifice, et qui sont obturées dans la seconde position du clapet, ledit clapet reprenant, sous l'effet du ressort, sa première position à surface de passage normale après que la pression du gaz s'est installée sur les deux côtés du clapet.

Le clapet se trouve normalement dans la position ouverte, c'est-à-dire la position à surface de passage normale, et lorsque le robinet principal est ouvert le clapet est instantanément poussé sous l'effet de la vitesse et de la pression du gaz vers sa deuxième position, non-étanche, limitant la surface de passage du gaz en vue de limiter ou d'absorber l'onde de choc ou le choc adiabatique. Dans cette seconde position un petit orifice ayant une surface de passage suffisamment importante pour ne pas gêner le débit à faible pression reste ouvert, et après l'équilibrage des pressions, le clapet reprend sa position à surface de passage plus élevée, ce qui fait que le système selon l'invention permet d'avoir une perte de charge variable, contrairement à la perte de charge constante causée par les filtres connus. Le système selon l'invention permet de placer le filtre dans la queue du robinet (raccord d'entrée ou conique) ayant une surface plus importante et ainsi d'éviter des chocs sur le filtre. Le système selon l'invention est très intéressant pour des applications qui utilisent des gaz oxydants, c'est-à-dire de l'oxygène, mais a aussi des avantages non-négligeables pour des applications avec des gaz quelconques ou neutres. Le système est particulièrement adapté pour des applications oxygène supérieures à 200 bar. L'invention permet d'améliorer la sécurité des utilisateurs en évitant des phénomènes dangereux. Le système selon l'invention est particulièrement avantageux dans l'oxygénothérapie.

Le système est intéressant pour des robinets avec détendeur intégré à piston ayant un clapet dans la basse pression qui est normalement ouvert mais il peut s'appliquer à d'autres technologies. Par exemple, le système peut aussi être utilisé avec un détendeur ayant un clapet dans la haute pression en position normale fermée ou ouverte. En outre, selon un autre mode d'exécution le système selon l'invention peut être utilisé dans un ensemble d'un robinet standard ou classique pourvu d'une vanne ouverte/fermée relié par une canalisation à un détendeur. Dans ce cas le système anti-compression adiabatique se trouverait dans la canalisation juste devant le siège du détendeur (revendication 4).

D'autres modes d'exécution avantageux de l'invention sont définis dans les revendications dépendantes.

L'invention sera maintenant expliquée en plus grand détail en référence aux dessins annexés, sur lesquels :
La figure 1 représente un robinet pour bouteille de gaz à détendeur intégré et avec le système anti-compression adiabatique selon l'invention, la vanne principale ouverte/fermée se trouvant en position fermée, et le clapet du système anti-compression adiabatique se trouvant dans la première position à surface de passage normale ;
La figure 2 est une vue semblable à la figure 1 mais avec la vanne principale en position ouverte et le clapet du système anti-compression adiabatique se trouvant dans la deuxième position limitant la surface de passage du gaz ;
La figure 3 représente le système anti-compression adiabatique (détail X) de la figure 1, en échelle agrandie, avec le clapet se trouvant dans sa position à surface de passage normale qu'il occupe lorsque la vanne principale du robinet est fermée ou si la vanne principale du robinet est ouverte après que la pression du gaz s'est équilibrée sur les deux côtés du clapet ;
La figure 4 est une vue semblable à la figure 3 mais montre le détail Z de la figure 2, en échelle agrandie, c'est-à-dire le clapet se trouvant dans sa position limitant la surface de passage du gaz, et
la figure 5 représente la courbe de détente pour un robinet de l'état de la technique antérieure et un robinet avec le système selon l'invention.

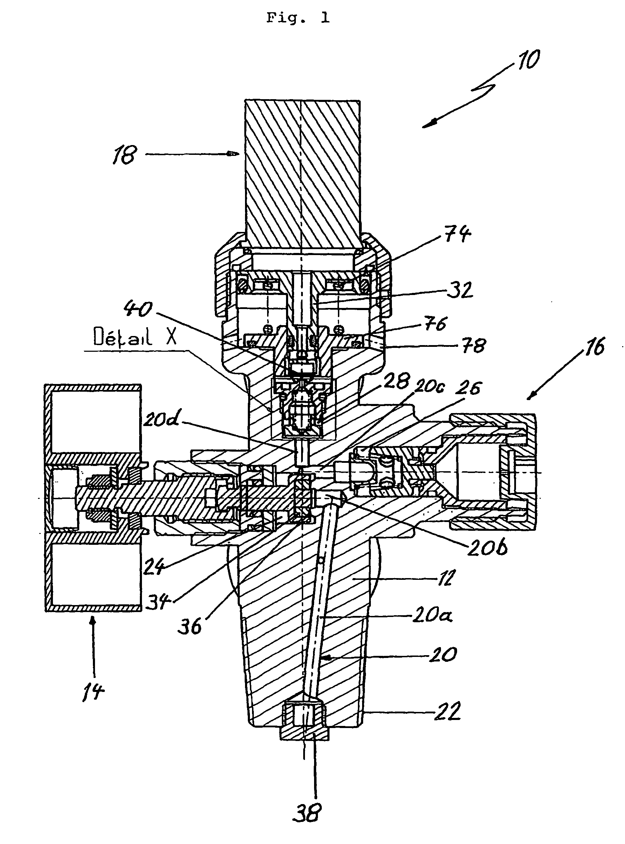

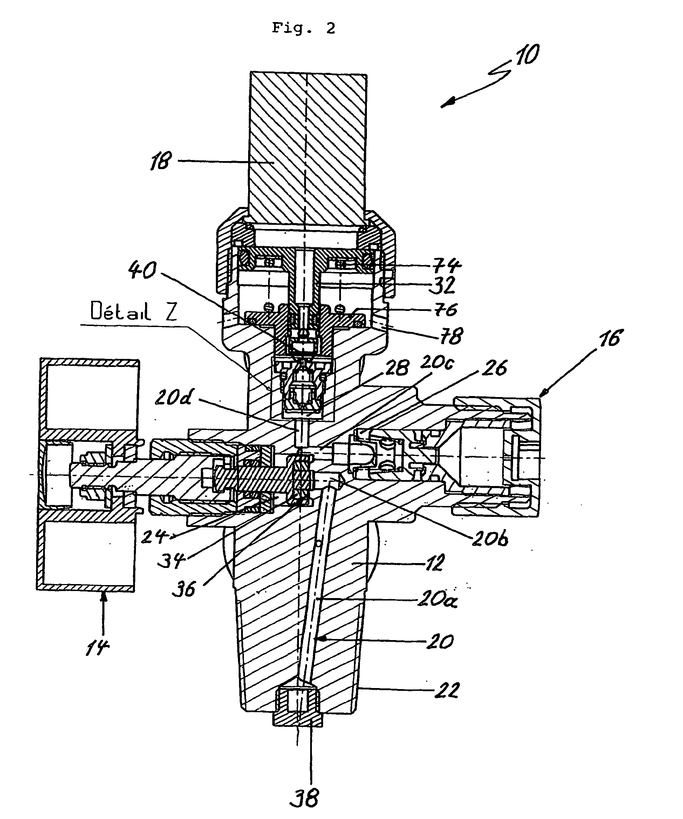

Les figures 1 et 2 représentent un robinet 10 pour bouteille de gaz selon la présente invention comportant un corps de robinet 12, une vanne principale ouverte/fermée 14, une vanne de remplissage 16 et un détendeur intégré 18. Un passage de gaz 20 s'étend de l'extrémité inférieure 22 de raccordement du corps de robinet 12 à la bouteille de gaz (non-représentée) jusqu'au détendeur intégré 18. Ce passage de gaz 20 est désigné couramment comme partie haute pression du robinet 10.

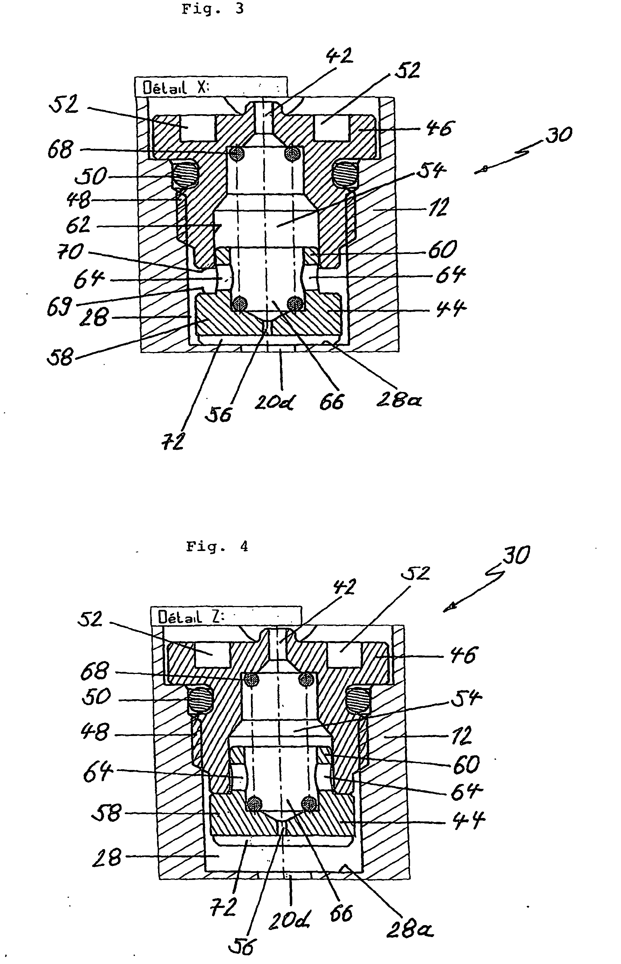

Le passage de gaz 20 a une première partie 20a s'étendant de l'extrémité inférieure du corps de robinet 12 obliquement vers le haut et communiquant avec une première partie transversale 20b qui débouche dans une première cavité transversale 24 qui, à son tour, est en communication avec une deuxième partie transversale 20c du passage de gaz 20 qui, à son tour débouche dans une deuxième cavité transversale 26. Le passage de gaz comporte en outre une partie verticale 20d qui communique avec la deuxième partie transversale 20c et qui a un contre-alésage vertical 28, représenté le mieux sur les figures 3 et 4, et dans lequel est disposé le système anti-compression adiabatique 30 selon l'invention (détails X et Z des figures 1 et 2). Le système anti-compression adiabatique 30 se trouve dans l'alésage 28 juste en-dessous du piston 32 du détendeur 18 qui est raccordé à l'extrémité supérieure du corps du robinet 12 et qui est connu dans la technique antérieure.

La vanne principale 14 est aussi connue dans la technique antérieure et ne sera donc pas décrite ici en détail. Il suffit de mentionner que cette vanne principale 14 est pourvue d'une bague d'étanchéité 34 engageant de façon étanche un siège annulaire 36 au fond de la première cavité transversale 24 lorsque la vanne principale 14 est fermée. En position d'ouverture de la vanne principale 14 la bague d'étanchéité 34 est dégagée du siège annulaire 36. Aussi la vanne de remplissage 16 est connue dans la technique antérieure et ne sera donc pas décrite ici en détail. Un filtre 38 se trouve à l'extrémité inférieure de la première partie oblique 20a du passage de gaz 20. Le piston 32 du détendeur 18 est pourvu à son extrémité inférieure d'une pastille 40 en matière plastique qui coopère avec un orifice fixe 42 du siège du détendeur 46, voir les figures 3 et 4, en vue du réglage de la pression du gaz.

Le système anti-compression adiabatique 30, qui sera maintenant décrit en référence aux figures 3 et 4, comporte deux pièces 44 et 46 emboîtées l'une dans l'autre. La première pièce 44, c'est-à-dire la pièce inférieure, est un clapet 44 mobile en direction verticale dans le contre-l'alésage vertical 28 et l'autre pièce supérieure 46, c'est-à-dire le siège 46 du détendeur 18, est reçue par un engagement fileté 48 dans le contre-alésage 28. Une bague d'étanchéité 50 est disposée entre le siège fixe 46 et le corps de robinet 12. Le siège fixe 46 est pourvue de plusieurs creux 52 formés dans sa surface supérieure pour l'engagement d'un outil de serrage en vue de fixer le siège 46 dans le contre-alésage 28 du corps 12 du robinet. Un passage de gaz vertical 54 s'étend d'un bout à l'autre à travers les deux pièces 44 et 46 du système anti-compression adiabatique 30. Ce passage vertical 54 comporte à l'extrémité supérieure du siège 46 l'orifice fixe 42 coopérant avec la pastille 40 du piston 30 du détendeur 18 en vue du réglage de la pression du gaz. Le passage vertical 54 comporte aussi un orifice central 56 traversant le clapet 44 axialement et plaçant l'amont et l'aval du clapet 44 en communication permanente. Cet orifice 56 forme la surface de passage limitée. Le clapet mobile 44 situé sur le côté amont du siège fixe 46 est aussi pourvu d'une partie de guidage annulaire verticale 60 s'étendant vers le haut de l'extrémité de tête inférieure 58 du clapet 44 et reçue à coulissement dans un alésage vertical 62 du siège 46 du détendeur 18.

Une ou plusieurs découpures ou ouvertures radiales, par exemple des trous, 64 sont pratiquées dans la partie de guidage verticale 60 du clapet 44. Ces ouvertures 64 s'étendent radialement à travers la paroi de la partie de guidage 60 en vue de déboucher dans un alésage 66 formé à l'intérieur du clapet mobile 44. L'orifice central 56 du clapet 44 est aussi en communication avec l'alésage 66. L'alésage 66 est en communication permanente avec l'alésage 62 du siège 46 et l'alésage 62 est en communication permanente avec l'orifice 42.

Ces ouvertures radiales 64, dans la première position à surface de passage normale du clapet 44, débouchent dans le volume du contre-alésage 28 entourant le clapet 44 et font partie d'un passage contournant l'orifice central 56 et s'étendant autour de l'extérieur du clapet 44 dans le contre-alésage 28 en vue de placer l'amont du clapet 44, c'est-à-dire la partie 20d du passage de gaz 20 en communication avec l'aval du clapet 44, c'est-à-dire l'aval de l'orifice central 56 du clapet 44 du système anti-compression adiabatique 30.

Un ressort de compression 68 est prévu à l'intérieur des deux pièces 44 et 46 et s'appuie en haut contre une surface de fond de l'alésage 62 du siège 46 du détendeur 18 et en bas contre une surface de fond de l'alésage 66 du clapet 44 en vue de pousser normalement le clapet mobile 44 vers le bas vers sa première position en engagement avec une surface de fond 28a du contre-alésage 28 du corps 12 du robinet, autour de la partie 20d du passage de gaz 20 débouchant dans le contre-alésage 28.

La partie de tête 58 du clapet 44 est pourvu à son extrémité supérieure d'une épaule radiale formant surface de butée annulaire 69 pouvant contacter une surface annulaire formant contre-butée 70 à l'extrémité inférieure du siège 46 du détendeur 18.

Le diamètre extérieur de la partie de tête 58 du clapet mobile 44 est inférieur au diamètre de la surface circonférentielle interne, qui l'entoure, du contre-alésage 28 et les ouvertures 64 sont formées dans la partie de guidage verticale 60 entre l'épaule radiale 69 et l'extrémité supérieure de la partie de guidage 60.

A l'extrémité inférieure de la partie de tête 58 du clapet mobile 44, sur sa surface radiale écartée du siège 46 du détendeur 18, sont pourvus des moyens appropriés, tel que des écarteurs, des nervures ou des rainures formant au moins un passage radial 72, ou n'importe quel autre moyen approprié pour assurer que le clapet mobile 44 ne puisse pas venir en engagement étanche avec la surface de fond 28a de l'alésage 28 du corps 12 du robinet, de sorte que dans la position inférieure (première position) du clapet 44, représentée en figure 3, la partie 20d du passage de gaz 20 soit en communication avec l'aval du clapet 44 (aval de l'orifice central 56) par le volume du contre-alésage 28 entourant le clapet 44 et par les ouvertures radiales 64 (formant la surface de passage normale), et aussi par l'orifice central 56 formant la surface de passage limité.

Par contre, dans la position supérieure (seconde position) du clapet mobile 44, c'est-à-dire sa position à surface de passage limitée représentée en figure 4, le clapet mobile 44 est déplacé vers le haut de sorte que sa surface de butée annulaire 69 soit en contact avec la surface de contre-butée 70 du siège fixe 46 du détendeur 18, et la partie de guidage 60 avec ses ouvertures radiales 64 est reçue totalement à l'intérieur de l'alésage 62 du siège fixe 46. Les ouvertures 64 sont donc obturées ou fermées et le gaz ne peut plus pénétrer du contre-alésage 28 par ces ouvertures 64 à l'intérieur du système anti-compression adiabatique 30. En conséquence, le gaz sous pression élevée peut passer par le système anti-compression adiabatique 30 seulement par le petit orifice central limité 56 et le choc adiabatique appliqué à la pastille 40 du piston mobile 32 du détendeur 10 est limité.

Il est encore à noter que le gaz qui s'échappe par l'orifice 42 du siège fixe 46 s'écoule vers le haut dans un passage annulaire entourant l'extrémité inférieure du piston 32 du détendeur 18, passe ensuite à l'intérieur du piston 32 et quitte le piston de son côté supérieur. Si la pression sur le côté supérieur du piston 32 devient trop grande le piston 32 est forcé vers le bas contre la force du ressort hélicoïdal 74 (figures 1 et 2) en vue de réduire l'écartement entre l'orifice 42 du siège fixe 46 et la pastille 40 du piston 32. Un clapet de sûreté 76 entoure le piston 32 du détendeur 18. Si la pression en-dessous de ce clapet de sûreté 76 devient trop élevée, ce clapet 76 est déplacé verticalement vers le haut contre la force du ressort et le gaz peut s'échapper par les trous radiaux 78.

Le système anti-compression adiabatique 30 se trouve normalement dans la position de la figure 3 lorsque le robinet principal 14 est fermé. Dans ce cas le clapet mobile 44 est poussé par le ressort 68 vers le bas et engage la surface 28a du fond du contre-alésage 28 du corps 12 du robinet 10 autour de la partie 20d du passage de gaz 20.

Lorsque le robinet 14 est ouvert, le gaz sous haute pression arrivant à vitesse élevée par la partie 20d du passage 20 force le clapet mobile 44 vers le haut contre l'effet du ressort 68 en vue de mouvoir le clapet 44 vers sa position supérieure dans laquelle les ouvertures 64 se trouvent à l'intérieur du siège fixe 46 du détendeur 18 et ne sont donc plus en communication avec le volume du contre-alésage 28 entourant le clapet mobile 44. Le gaz sous pression peut passer par le système anti-compression adiabatique 30 seulement par l'orifice 56 à surface de passage minimale pratiqué dans le clapet 44 qui est en communication permanente avec l'amont et l'aval du clapet 44.

Lorsque la pression du gaz s'est installée sur les deux côtés du clapet mobile 44, le ressort 44 peut de nouveau pousser le clapet mobile 44 vers le bas en contact avec la surface de fond 28a du contre-alésage 28 (position de la figure 3). Dans cette position une surface de passage normale agrandie est offerte au gaz sous pression qui peut maintenant contourner l'orifice central 56 et passer de la partie 20d du passage de gaz 20 dans le passage radial 72 radialement vers l'extérieur dans celui-ci, et ensuite vers le haut dans le contre-alésage 28 autour de la partie de tête inférieure 58 du clapet 44 et finalement vers l'intérieur par les ouvertures radiales 64 pour pénétrer dans le passage vertical 54 en vue de s'échapper par l'orifice 42 situé à proximité de la pastille 40 du piston 32 du détendeur 18.

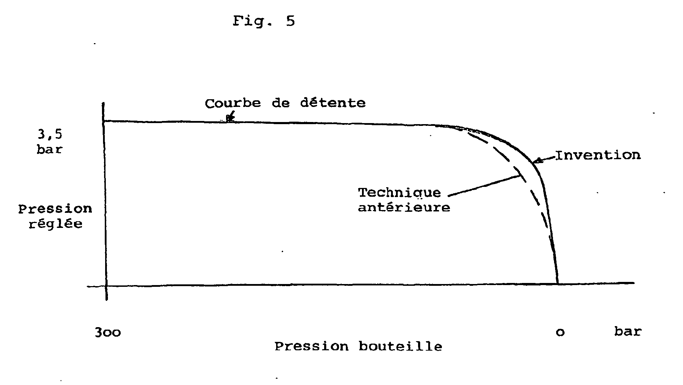

Donc, à l'ouverture du robinet principal 14 le système anti-compression adiabatique 30 limite le débit et la vitesse du gaz en vue de protéger le détendeur, en offrant une surface de passage limitée au gaz sous pression, et lorsque la pression du gaz s'est installée sur les deux côtés du clapet, le clapet est amené dans une position ouverte, offrant une surface de passage normale plus élevée (deux à cinq fois plus élevée) au gaz sous pression. En comparaison aux filtres (ayant une granulométrie ou une porosité d'environ 20µm) connus dans la technique antérieure le système anti-compression adiabatique selon la présente invention offre une surface de passage variable au gaz sous pression, c'est-à-dire une surface de passage limité à l'ouverture de la vanne principale et une surface de passage normale plus élevé après que le gaz s'est installé sur les deux côtés du clapet. Donc, le système selon l'invention est un système à perte de charge variable. Il est à noter que la résistance au passage du gaz sous pression par l'orifice central 58 est moins élevé que la résistance au passage du gaz par les filtres connus de la technique antérieure, et donc le système de la présente invention gène la courbe de détente moins que les filtres connus, comme représentée en figure 5, mais fournit la même protection contre le choc adiabatique que les filtres connus. Comme représenté en figure 5, avec le système selon l'invention, la pression réglée P₂ désirée peut être maintenue plus longtemps lorsque la pression P₁ dans la bouteille diminue et la bouteille est presque vide. En d'autres mots, les courbes de débit seront de meilleure qualité qu'avec le système traditionnel (ou avec filtre).

L'invention n'est pas limitée aux modes d'exécution particuliers représentés sur les dessins, bien au contraire, diverses modifications peuvent y être apportées sans pour cela quitter la portée des revendications annexées. Par exemple, les découpures ou ouvertures circulaires 64 pourraient être remplacées par des découpures allongées s'étendant jusqu'à l'extrémité supérieure de la partie de guidage verticale 60. En outre, au lieu de former un ou plusieurs passages radiaux 72 dans la surface amont du clapet 44, cette surface peut être lisse et des passages ou rainures peuvent être formées dans la surface de fond 28a du contre-alésage 28.

## Revendications

1. Robinet pour bouteille de gaz comportant un corps de robinet (12) ayant un passage de gaz (20) formé dans le corps du robinet (12), une vanne ouverte/fermée (14) et un détendeur (18) attachés au corps de robinet (12), la vanne (14) pouvant être ouverte pour permettre au gaz de s'écouler en mode de soutirage par ledit passage (20) vers le détendeur (18), et un moyen anti-compression adiabatique (30) comportant un clapet mobile (44) disposé dans ledit passage de gaz (20), ce clapet (44) à l'ouverture de la vanne (14), étant forcé d'une première position à surface de passage normale, vers une deuxième position, non-étanche, à surface de passage limitée, ledit clapet (44) étant sollicité par un ressort (68) vers sa première position, et étant pourvu d'un orifice limité (56) qui le traverse et place l'amont et l'aval du clapet (44) en communication permanente, cet orifice (56) formant la surface de passage limitée, l'amont et l'aval du clapet (44) étant aussi en communication dans la première position à surface de passage normale du clapet (44) par un passage contournant ledit orifice (56) et s'étendant autour du clapet (44), ce passage contournant l'orifice (56) étant fermé dans la seconde position du clapet., **caractérisé en ce que**, pour limiter l'onde de choc se produisant en cas d'ouverture de la vanne (14) en aval de celle-ci, le moyen anti-compression adiabatique (30) est disposé entre la vanne (14) et le détendeur (18) et comporte le clapet mobile (44) et un siège de détendeur fixe (46) pourvu d'un orifice (42) faisant face à un élément de réglage (32) du détendeur (18), **en ce que** le ressort (68) est disposé entre le clapet (44) et le siège (46) du détendeur (18) et le clapet (44), situé à l'extrémité amont du siège (46) du détendeur (18), est pourvu d'une partie de guidage annulaire (60) qui est reçue de façon coulissante à l'intérieur du siège (46) du détendeur (18), cette partie de guidage annulaire (60) ou le siège (46) du détendeur (18) étant pourvu d'une ou plusieurs découpures (64) qui sont ouvertes dans la première position du clapet (44) et placent ledit passage contournant l'orifice (56) en communication avec l'aval de cet orifice (56), et qui sont obturées dans la seconde position du clapet (44), ledit clapet (44) reprenant, sous l'effet du ressort (68), sa première position à surface de passage normale après que la pression du gaz s'est installée sur les deux côtés du clapet (44).

2. Robinet selon la revendication 1, **caractérisé en ce que** le clapet (44) a une surface de butée (69) venant contacter le siège (46), du détendeur (18) dans la deuxième position du clapet (44).

3. Robinet selon la revendication 1, **caractérisé en ce que** le clapet (44) est pourvu à son extrémité opposée au siège (46) du détendeur (18) d'une surface radiale pourvue de moyens d'écartement en vue de maintenir, dans la première position du clapet (44), la communication du passage contournant le clapet (44) avec le passage du gaz (20) en amont du clapet (44).

4. Ensemble d'un robinet pour bouteille de gaz et d'un détendeur avec une canalisation prévue entre le robinet et le détendeur, le robinet comportant avec vanne ouverte/fermée et ledit ensemble ayant un moyen anti-compression adiabatique comportant un clapet mobile pour limiter la compression adiabatique, ce clapet à l'ouverture de la vanne, étant forcé d'une première position à surface de passage normale, vers une deuxième position, non-étanche, à surface de passage limitée, ledit clapet étant sollicité par un ressort vers sa première position, et étant pourvu d'un orifice limité qui le traverse et place l'amont et l'aval du clapet en communication permanente, cet orifice formant la surface de passage limitée, l'amont et l'aval du clapet étant aussi en communication dans la première position à surface de passage normale du clapet par un passage contournant ledit orifice et s'étendant autour du clapet, ce passage contournant l'orifice étant fermé dans la seconde position du clapet, **caractérisé en ce que**, pour limiter l'onde de choc se produisant en cas d'ouverture de la vanne en aval de celle-ci, le moyen anti-compression adiabatique est disposé dans ladite canalisation entre la vanne et le détendeur et comporte le clapet mobile et un siège de détendeur fixe pourvu d'un orifice faisant face à un élément de réglage du détendeur, **en ce que** le ressort est disposé entre le clapet et le siège du détendeur et le clapet, situé à l'extrémité amont du siège du détendeur, est pourvu d'une partie de guidage annulaire qui est reçue de façon coulissante à l'intérieur du siège du détendeur, cette partie de guidage annulaire ou le siège du détendeur étant pourvu d'une ou plusieurs découpures qui sont ouvertes dans la première position du clapet et placent ledit passage contournant l'orifice en communication avec l'aval de cet orifice, et qui sont obturées dans la seconde position du clapet, ledit clapet reprenant, sous l'effet du ressort, sa première position à surface de passage normale après que la pression du gaz s'est installée sur les deux côtés du clapet.

5. Ensemble selon la revendication 4, **caractérisé en ce que** le clapet a une surface de butée venant contacter le siège du détendeur dans la deuxième position du clapet.

6. Ensemble selon la revendication 4, **caractérisé en ce que** le clapet est pourvu à son extrémité opposée au siège du détendeur d'une surface radiale pourvue de moyens d'écartement en vue de maintenir, dans la première position du clapet, la communication du passage contournant le clapet avec le passage du gaz en amont du clapet.

## Patentansprüche

1. Ventil für eine Gasflasche mit einem Ventilkörper (12), der einen Gaskanal (20) aufweist, welcher in dem Ventilkörper (12) geformt ist, ein Auf-Zu-Ventil (14) und ein Druckminderer (18), die am Ventilkörper (12) befestigt sind, wobei das Auf-Zu-Ventil (14) zu öffnen ist, damit das Gas in dem Gasentnahmebetrieb durch den Kanal (12) zu dem Druckminderer (18) strömen kann, und mit einem Schutzmittel gegen adiabatische Kompression (30), welches ein bewegliches Klappenventil (44) aufweist, das in dem Gaskanal (20) angeordnet ist, wobei das Klappenventil (44) beim Öffnen des Auf-Zu-Ventils (14) aus einer ersten Stellung mit normalem Durchflussquerschnitt in eine zweite, nicht dichte Stellung, mit begrenztem Durchflussquerschnitt gedrückt wird, und das Klappenventil (44) durch eine Feder (68) in seine erste Stellung vorgespannt ist, und mit einer begrenzten Durchflussöffnung (56) versehen ist, die das Klappenventil durchsetzt und die stromaufwärtige Seite des Klappenventils (44) in permanente Verbindung mit der stromabwärtigen Seite desselben setzt, wobei die Öffnung (56) den begrenzten Durchflussdurchschnitt bildet, und wobei die stromaufwärtige und die stromabwärtige Seite des Klappenventils (44) in der ersten Stellung mit normalem Durchflussdurchschnitt des Klappenventils (44) auch über einen Durchflusskanal, der die Öffnung (56) umgeht und um das Klappenventil (44) herumführt in Verbindung miteinander sind, wobei der die Öffnung (56) umgehende Durchflusskanal in der zweiten Stellung des Klappenventils verschlossen ist, **dadurch gekennzeichnet, dass** zum Begrenzen der Stosswelle, die sich beim Öffnen des Auf-Zu-Ventils (14) stromabwärts desselben aufbaut, das Schutzmittel gegen adiabatische Kompression (30) zwischen dem Auf-Zu-Ventil (14) und dem Druckminderer (18) angeordnet ist und das bewegliche Klappenventil (44) sowie einen festen Sitz (46) des Druckminderers umfasst, der mit einer Öffnung (42) versehen ist, welche gegenüber einem Reglerelement (32) des Druckminderers (18) liegt, und dass die Feder (68) zwischen dem Klappenventil (44) und dem Sitz (46) des Druckminderers (18) angeordnet ist, und das Klappenventil (44), das sich am stromaufwärtigen Ende des Sitzes (46) des Druckminderers (18) befindet mit einem ringförmigen Führungsteil (60) versehen ist, der im Innern des Sitzes (46) des Druckminderers (18) gleitend aufgenommen ist, wobei dieses ringförmige Führungsteil (60) oder der Sitz (46) des Druckminderers (18) mit einer oder mehreren Ausnehmungen (64) versehen ist, die in der ersten Stellung des Klappenventils (44) offen sind und den die Öffnung (46) umgehenden Durchflusskanal in Verbindung mit der stromabwärtigen Seite der Öffnung (56) setzen, und die in der zweiten Stellung des Klappenventils (44) verschlossen sind, und wobei das Klappenventil (44), unter der Wirkung der Feder (68), in seine erste Stellung mit normalem Durchflussquerschnitt zurückgelangt nachdem der Gasdruck sich auf beiden Seiten des Klappenventils (44) aufgebaut hat.

2. Ventil nach Anspruch 1, **dadurch gekennzeichnet, dass** das Klappenventil (44) eine Anschlagfläche (69) aufweist, die sich in der zweiten Stellung des Klappenventils (44) gegen den Sitz des Druckminderers (46) anlegt.

3. Ventil nach Anspruch 1, **dadurch gekennzeichnet, dass** das Klappenventil (44) an seinem dem Sitz (46) des Druckminderers (18) gegenüberliegenden Ende eine Radialfläche aufweist, die mit Abstandsmitteln versehen ist, um in der ersten Stellung des Klappenventils (44) die Verbindung des um das Klappenventil (44) herumführenden Durchflusskanals mit dem Gaskanal (20) stromaufwärts des Klappenventils (44) aufrecht zu halten.

4. Baugruppe eines Ventils für eine Gasflasche und eines Druckminderers mit einer Leitung zwischen dem Ventil und dem Druckminderer, wobei das Ventil mit einem Auf-Zu-Ventil versehen ist und die Baugruppe ein Schutzmittel gegen adiabatische Kompression aufweist, das ein bewegliches Klappenventil zum Begrenzen der adiabatischen Kompression aufweist, welches beim Öffnen des Auf-Zu-Ventils aus einer ersten Stellung mit normalem Durchflussquerschnitt in eine zweite, nicht dichte Stellung mit begrenztem Durchflussquerschnitt gedrängt wird, wobei das Klappenventil durch eine Feder in seine erste Stellung vorgespannt ist, und mit einer begrenzten Durchflussöffnung versehen ist, die das Klappenventil durchsetzt und die stromaufwärtige Seite des Klappenventils (44) in permanente Verbindung mit der stromabwärtigen Seite desselben setzt, wobei die Öffnung den begrenzten Durchflussquerschnitt bildet und wobei die stromaufwärtige und die stromabwärtige Seite des Klappenventils in der ersten Stellung mit normalem Durchflussquerschnitt des Klappenventils auch über einen Durchflusskanal, der diese Öffnung umgeht und um das Klappenventil herumführt in Verbindung miteinander sind, und der die Öffnung umgehende Durchflusskanal in der zweiten Stellung des Klappenventils verschlossen ist, **dadurch gekennzeichnet, dass** zum Begrenzen der Stosswelle, die sich beim Öffnen des Auf-Zu-Ventils stromabwärts desselben aufbaut, das Schutzmittel gegen adiabatische Kompression in der Leitung zwischen dem Auf-Zu-Ventil und dem Druckminderer angeordnet ist und das bewegliche Klappenventil sowie einen festen Sitz des Druckminderers umfasst, der mit einer Öffnung versehen ist welche gegenüber einem Reglerelement des Druckminderers liegt, und dass die Feder zwischen dem Klappenventil und dem Sitz des Druckminderers angeordnet ist, und das Klappenventil, das sich am stromaufwärtigen Ende des Sitzes des Druckminderers befindet mit einem ringförmigen Führungsteil versehen ist, der im Innern des Sitzes des Druckminderers gleitend aufgenommen ist, wobei dieser ringförmige Führungsteil oder der Sitz des Druckminderers mit einer oder mehreren Ausnehmungen versehen ist, die in der ersten Stellung des Klappenventils offen sind und den die Öffnung des Klappenventils umgehenden Durchflusskanal in Verbindung mit der stromabwärtigen Seite der Öffnung setzen, und die in der zweiten Stellung des Klappenventils verschlossen sind, wobei die Ventilklappe, unter der Wirkung der Feder, in seine erste Stellung mit normalem Durchflussquerschnitt zurückgelangt nachdem der Gasdruck sich auf beiden Seiten des Klappenventils aufgebaut hat.

5. Baugruppe nach Anspruch 4, **dadurch gekennzeichnet, dass** das Klappenventil eine Anschlagfläche aufweist, die sich in der zweiten Stellung des Klappenventils gegen den Sitz des Druckminderers legt.

6. Baugruppe nach Anspruch 4, **dadurch gekennzeichnet, dass** das Klappenventil an seinem dem Sitz des Druckminderers gegenüberliegenden Ende eine Radialfläche aufweist, die mit Abstandsmitteln versehen ist, um in der ersten Stellung des Klappenventils die Verbindung des um das Klappenventil herumführenden Durchflusskanals mit dem Gaskanal stromaufwärts des Klappenventils aufrecht zu halten.

## Claims

1. Tap for a gas cylinder comprising a tap body (12) having a gas passage (20) formed in the tap body (12), an open-closed valve (14) and a pressure reducer (18) attached to the tap body (12), the valve (14) being adapted to be opened to permit gas to flow in a bleed mode through said passage (20) towards the pressure reducer (18), and an anti-adiabatic-compression means (30) comprising a movable clack valve (44) arranged in said gas passage (20), said clack valve (44), on opening of the open-closed valve (14), being urged from a first position of normal through flow area towards a second non-tight position of limited through flow area, said clack valve (44) being urged by a spring (68) towards its first position, and being provided with a restricted orifice (56) traversing the clack valve and placing the upstream side and the downstream side of the clack valve (44) in permanent communication, said orifice (56) forming said limited through flow area, the upstream side and the downstream side of the clack valve (44) being also in communication in the first position of normal through flow area of the clack valve (44) by a passage bypassing said orifice (56) and extending around the clack valve (44), said passage bypassing the orifice (56) being closed in the second position of the clack valve, **characterized in that** to limit the shock wave generated on opening of the open-closed valve (14) downstream thereof, the anti-adiabatic-compression means (30) is disposed between the open-closed valve (14) and the pressure reducer (18) and comprises the movable clack valve (44) and a fixed seat (46) of the pressure reducer provided with an opening (42) facing a control element (32) of the pressure reducer (18), and **in that** the spring (68) is disposed between the clack valve (44) and the seat (46) of the pressure reducer (18), and that the spring (68) is located between the check valve (44) and the seat (46) of the pressure reducer (18), and the clack valve (44), disposed at the upstream end of the seat (46) of the pressure reducer (18), is provided with an annular guide portion (60) that is slidably received in the interior of the seat (46) of the pressure reducer (18), said annular guide portion (60) or the seat (46) of the pressure reducer (18) being provided with one or more cut-outs (64) which are open in the first position of the clack valve (44) and place the passage bypassing the orifice (56) in communication with the downstream side of said orifice (56), and which are closed in the second position of the clack valve (44), said clack valve (44) returning, under the effect of the spring (68), to its first position of normal through flow area upon built-up of the gas pressure on both sides of the clack valve (44).

2. Tap according to claim 1, **characterized in that** the clack valve (44) has an abutment surface for engaging the seat (46) of the pressure reducer (18) in the second position of the clack valve (44).

3. Tap according to claim 1, **characterized in that** the clack valve (44) is provided at its end remote from the seat (46) of the pressure reducer (18) with a radial surface provided with spacer means in order to maintain, in the first position of the clack valve (44), the communication of the passage extending around the clack valve (44) with the gas passage (20) on the upstream side of the clack valve (44).

4. Assembly of a tap for a gas cylinder and a pressure reducer and comprising a conduit provided between the tap and the pressure reducer, said tap being provided with an open-closed valve and the assembly including an anti-adiabatic-compression means comprising a movable clack valve for limiting the adiabatic compression, the clack valve, on opening of the open-closed valve, being urged from a first position of normal through flow area towards a second non-tight position of limited through flow area, said clack valve being urged by a spring towards its first position and being provided with a restricted orifice traversing the clack valve and placing the upstream side and the downstream side of the clack valve in permanent communication, said orifice forming said limited through flow area, the upstream side and the downstream side of the clack valve being also in communication in the first position of normal through flow area of the clack valve by a passage bypassing said orifice and extending around the clack valve, said passage bypassing the orifice being closed in the second position of the clack valve, **characterized in that**, to limit the shock wave generated on opening of the open-closed valve downstream thereof, the anti-adiabatic-compression means is disposed in said conduit between the open-closed valve and the pressure reducer and comprises the movable clack valve and a fixed seat of the pressure reducer provided with an opening facing a control element of the pressure reducer, and that the spring is located between the clack valve and the seat of the pressure reducer, and the clack valve, disposed at the upstream end of the seat of the pressure reducer, is provided with an annular guide portion that is slidably received in the interior of the seat of the pressure reducer, said annular guide portion or the seat of the pressure reducer being provided with one or more cut-outs which are open in the first position of the clack valve and place the passage bypassing the orifice in communication with the downstream side of said orifice, and which are closed in the second position of the clack valve, said clack valve returning, under the effect of the spring, to its first position of normal through flow area upon built-up of the gas pressure on both sides of the clack valve.

5. Assembly according to claim 4, **characterized in that** the clack valve has an abutment surface for engaging the seat of the pressure reducer in the second position of the clack valve.

6. Assembly according to claim 4, **characterized in that** the clack valve is provided at its end remote from the seat of the pressure reducer with a radial surface provided with spacer means in order to maintain, in the first position of the clack valve, the communication of the passage extending around the clack valve with the gas passage on the upstream side of the clack valve.
